# EUROPEAN PATENT APPLICATION

(11) **EP 4 378 342 A1**
(43) Date of publication of application: **05.06.2024**
(21) Application number: 23212738.1
(22) Date of filing: 28.11.2023
(51) Int. Cl.: A43B 7/144, A43B 13/12, A43B 13/18, A43B 21/26, B29D 35/06

(54) **BASE OR TREAD COMPONENT FOR A FOOTWEAR AS WELL AS FOOTWEAR INCLUDING THE SAME COMPONENT**

(30) Priority: 01.12.2022 IT 202200024858
(71) Applicant: Pezzol Industries S.r.l., 70051 Barletta (Barletta-Andria-Trani) (IT)
(72) Inventor: PIAZZOLLA, Giuseppe, 76125 TRANI (BARLETTA-ANDRIA-TRANI) (IT)
(74) Representative: Feltrinelli, Secondo Andrea

(57) **Abstract**

The present invention concerns a base or tread component for a footwear comprising a main plate element (2) made of thermoplastic polyurethane (TPU) and a casing or wrapping element (3) made by molding of thermoplastic polyurethane (TPU) on an upper rear portion (2a) of the main plate element (2).

## Description

### TECHNICAL FIELD OF THE INVENTION

The present invention concerns a base or tread component for a footwear as well as a footwear including the same component, in particular for use as work footwear or as personal protective equipment (PPE).

### STATE OF THE ART

The development of the market and the needs of consumers have always been driven by the search for constant improvement in product performance.

In work footwear (PPE), this translates into the continuous satisfaction of the regulatory standards to which PPE must comply, with the development of systems to improve comfort, which must not undermine health and safety performance.

Safety footwear are used by many categories of workers, such as bricklayers, gardeners, painters, machine and construction site operators, and by many other types of workers.

These footwear protect the feet from injuries and accidents, but favor the development of foot and posture problems, and often increase the painful consequences of particular types of feet, such as flat feet.

In the world of work, the choice to make safety footwear mandatory represented a radical change, as it guaranteed real protection in all work environments defined as "at risk".

This safety device has been widely used not only on construction sites, as initially happened, but also in all situations in which there may be a risk for the feet, such as restaurant kitchens or laboratories of various kinds.

For many professional sectors, the use of safety footwear as protective clothing has become mandatory. These are usually footwear with a reinforced toe which can be made of plastic or metal, which have the task of protecting the foot from injuries in the event of falling objects or any accidents.

In some cases, the sole of the footwear can be reinforced to protect the lower part of the foot from possible injuries caused by nails or other sharp objects, but these measures are not sufficient, as the rigid reinforcing material prevents the natural and correct movement of the foot.

With regard to this aspect, the sole of work footwear, like other safety devices, is subject to certification and, in particular, must be anti-abrasion, anti-oil, anti-acid, anti-slip and anti-static.

Usually, the materials used to make the soles of work footwear are compact polyurethane and nitrile rubber. The latter, properly treated, protects HRO certified footwear, which resist heat (by contact) up to 300° C and are used for example by asphalt workers and welders.

As regards the tread design, it is designed to give maximum stability and grip to the sole in difficult situations.

As will therefore be understood, the choice of safety footwear is important, since excessive weight, bad breathability, a sole that is too rigid or unsuitable for the type of ground on which they will be used can make the footwear so uncomfortable that the operator prefers to give up using them, thus exposing themselves to considerable risks.

Unsuitable or deteriorated footwear that is not replaced promptly can cause alterations in the normal functions of the foot, and therefore can cause disorders and inflammatory reactions.

In essence, if the use of these footwear is positive and useful for the correct protection of the feet, it can lead to disadvantages and negative effects for the well-being of the foot and the entire posture.

The feet are in fact subjected to a condition of pressure in footwear for many hours during a normal working day, so many workers complain of pain and inflammation due precisely to the use of safety footwear.

The main foot pathologies that can develop over time are: heel pain, metatarsalgia, heel spurs, plantar fasciitis, talalgia, to name a few.

Those who spend a lot of time on their feet every day at work, walk a lot and have to carry heavy loads, often suffer from the worsening of this type of problem.

Prolonged use of these footwear can also cause osteoarticular pain, calluses and blisters, fungus on the toes due to poor perspiration, irritation or slight lesions on the skin, incorrect posture and back pain.

Although companies try to equip their workers with adequate and good quality footwear, long periods of use (often daily and lasting for years) and the high level of effort in some professions can still cause of various health problems not only strictly related to the feet, but also for example, back pain, knee or hip problems.

Historically, one of the first solutions studied involved the insertion of removable insoles into footwear, which are specific devices that can only be inserted into work footwear as they are designed and adapted for it.

This means that it is possible to customize an individual protective device such as work footwear by creating a personalized removable insole for each user, but this involves having to certify a device for each user, with costs and times that are not compatible with the market.

In recent years, manufacturers of safety footwear and legislators have not remained insensitive to the complaints of those who are subject to the obligation and consequently things have progressed.

The weight of the footwear has decreased and the shape has also been partially softened thanks to the adoption of materials such as Kevlar, which is much lighter than steel, but performs the same protective tasks.

However, this was not enough, so the manufacturers focused on the creation/introduction of elements in the sole that could act as energy dissipators and/or return part of it during walking.

These elements are often ineffective because they must be compatible with the production process of making the soles and footwear and at the same time they must last over time.

In this regard, safety footwear is made according to two main methods.

A first method consists in the application of the sole or gluing and requires that the soles and uppers are made separately and then glued with specific glues. The soles in question can be made of rubber, TPU, EVA and contain inserts and elements inside them designed to disperse energy. These products are typical of the sporting world since they can use materials that do not have to comply with safety standards, and do not have to maintain regular performance for long continuous periods of use.

In this case, the safety footwear applied is often heavy and not very comfortable because to comply with the requirements of the law, they are very robust and not very flexible.

However, according to this method it is possible to insert energy dispersion devices into the sole in the heel area, which can be chosen between air cushions, gel, TPU recessed inserts, all very rigid and not very resistant elements, which make the footwear unsuitable to the most difficult environments as well as being not very functional, because they are confined in restricted areas and blocked in the matrix of the sole.

A second method concerns footwear made by direct injection onto the upper and is carried out by injection molding which involves the injection of a molten (plasticized) plastic material at high pressure inside a closed mold, which is opened after the solidification of the object.

Usually, to carry out this method, polyol and isocyanate are conveyed onto an injection screw where they are mixed, so as to react and form polyurethane, which, pushed into the mold, solidifies forming the midsole which inextricably welds the tread (which can be in rubber, TPU, TR, or polyurethane) to the upper, generating a long-lasting and high-performance product over time.

The injection process being very mechanized, does not allow many variations, so all manufacturers have tried over time to improve the energy absorption/return performance in the heel by inserting inserts either under the upper or resting on the tread and blocked in the midsole, but not totally wrapped otherwise its position and functioning could not be certain.

This entails a series of major limitations:
- the material used for the insert must be compatible with polyurethane to chemically bond to the midsole,
- the material of the insert must be resistant to atmospheric agents and the most aggressive working environments as it is often exposed,

- the material design for the insert must have a functional structure at the heel,
- the material for the insert must not create dysfunctions when using the sole or compromise its durability and efficiency.

US2015013185A1 describes a solution according to state of the prior art.

### OBJECTS OF THE INVENTION

The main purpose of the present invention is to improve the state of the art in the footwear sector, in particular in work or safety footwear.

Another object of the present invention is to provide a base or tread component for a footwear or a footwear owing to which it is possible to use any insert with rebounding capacity.

Yet another object of the present invention is to allow the use of a wide range of materials for a respective insert.

Another object of the present invention is to provide a footwear which combines increased comfort with a system integrated into the footwear itself which eliminates or significantly reduces the risks of breakage or malfunction.

In accordance with one aspect of the present invention, it is provided a base or tread component for footwear, in particular a work or safety footwear, according to claim 1.

In accordance with an aspect of the present invention, a footwear is provided, in particular a work or safety footwear, according to claim 14.

The dependent claims refer to preferred and advantageous forms of the invention.

### BRIEF DESCRIPTION OF THE DRAWINGS

Further features and advantages of the present invention will be more evident from the detailed description of some preferred embodiments of a base component and of a footwear, illustrated by way of non-limiting example, in the attached drawings in which:

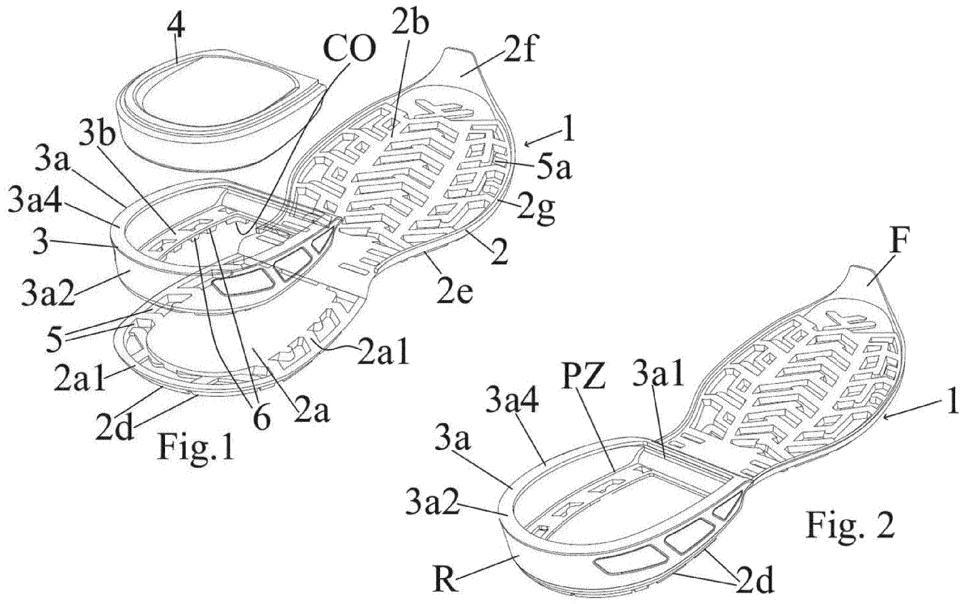

- figures 1 and 2 illustrate a base or tread component with a shock-absorbing insert in accordance with the present invention, respectively, in exploded and assembled view,

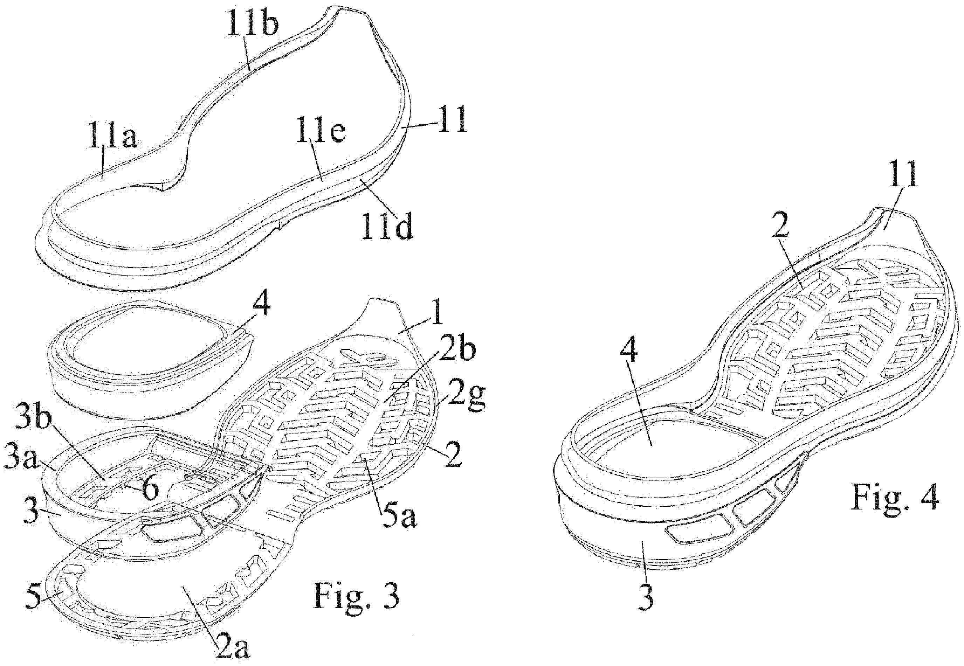

- figures 3 and 4 are respective exploded and assembled perspective views, of a sole according to the present invention including a base or tread component in accordance with the present invention with a shock-absorbing insert and a midsole,
- figure 5 is an exploded side view of the sole of figure 3,

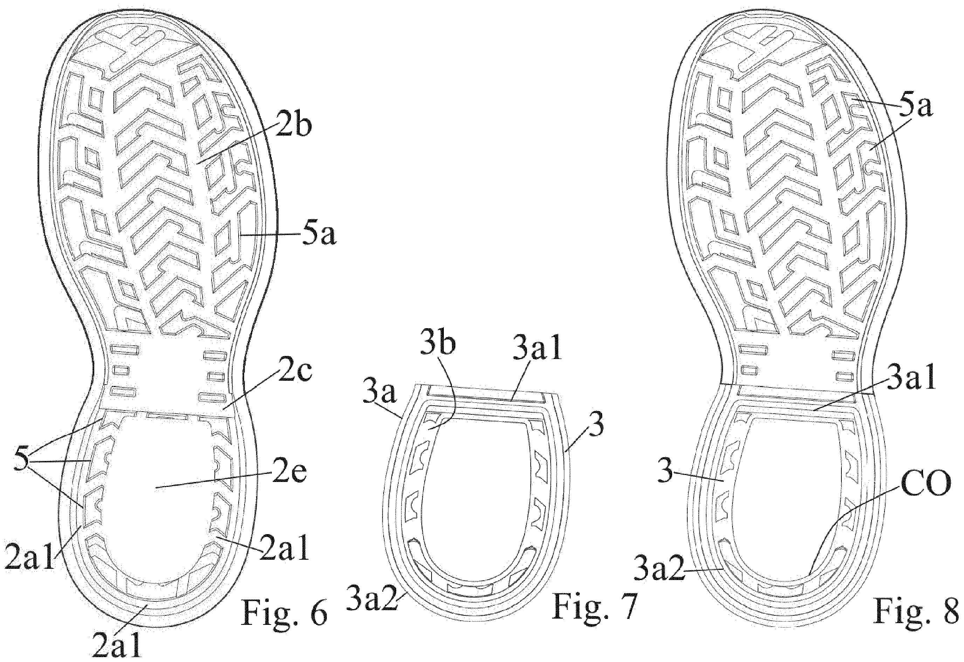

- figure 6 is a top view of the sole of figure 3,
- figure 7 is a top view of a casing or wrapping element of the sole of figure 3,
- figure 8 illustrates the sole of figure 6 with trimmed edge,

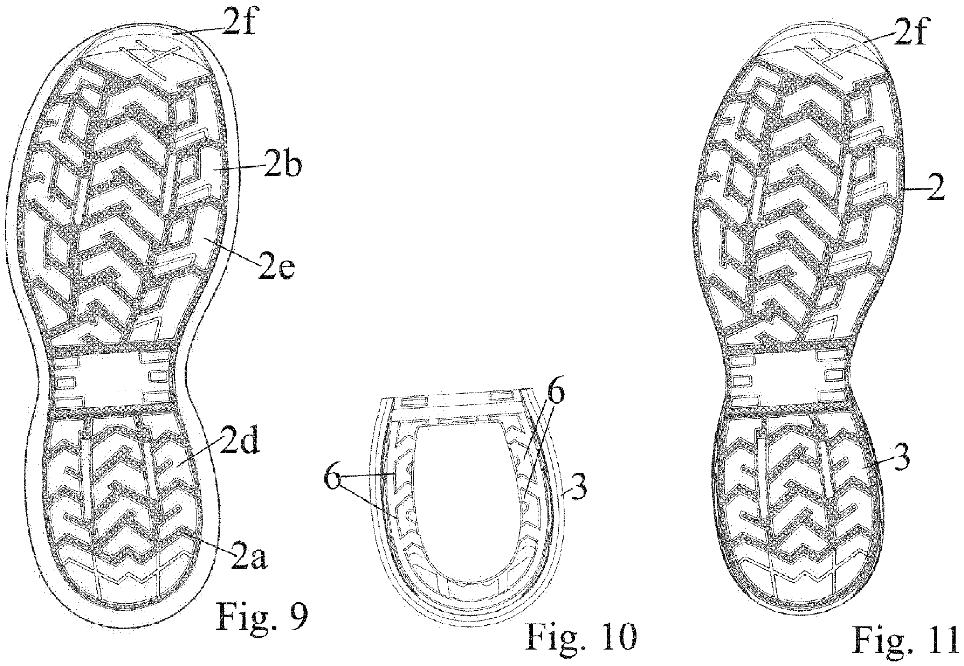

- figures 9 to 11 illustrate from below the components, respectively, of figures 6-8,

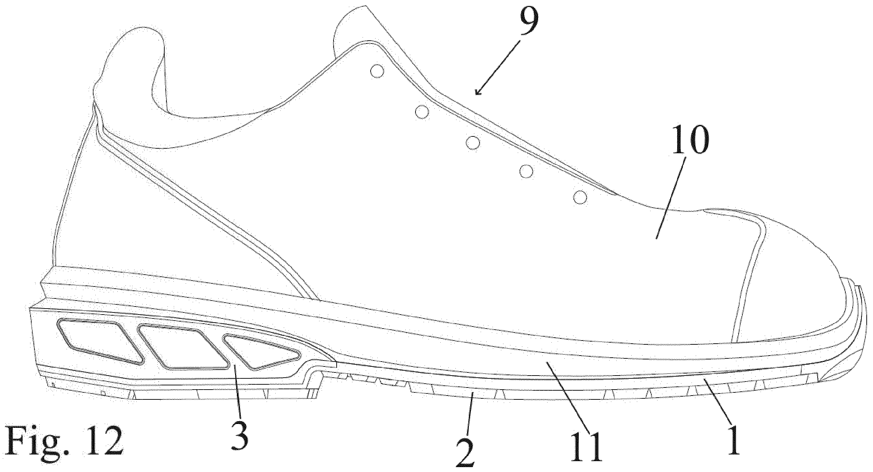

- figure 12 is a side view of a footwear according to the present invention,

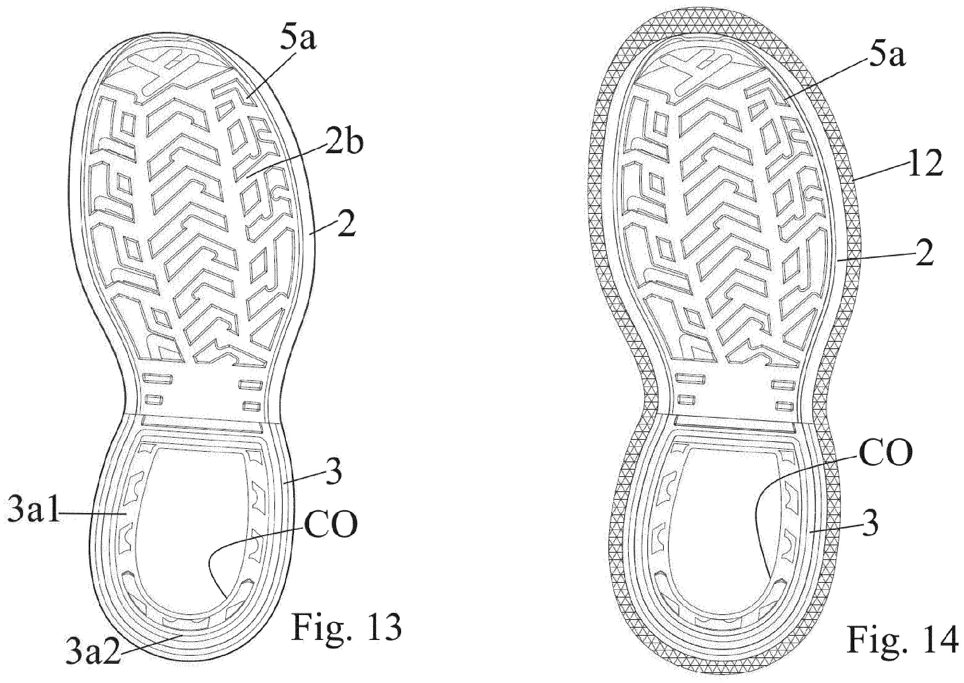

- figures 13 and 14 are plan views showing, respectively, a base or tread component and a component of a mold for the production of a footwear equipped with this base or tread component, and
- figures 15 to 17 illustrate the steps of a method according to the present invention for obtaining a footwear in accordance with the present invention.

In the attached drawings, identical parts or components are identified by the same reference numbers.

### EMBODIMENTS OF THE INVENTIONS

With reference to the attached figures, the present invention concerns a base or tread component 1 for a footwear, for example a work or safety footwear, which base or tread component 1 includes a main plate element 2 made of thermoplastic polyurethane (TPU).

The base or tread component 1 then comprises a casing or wrapping element 3 made by molding, preferably by injection, of thermoplastic polyurethane (TPU) on an upper rear portion 2a of the main plate element 2. The molding is carried out directly, in the sense that there are no components interposed between the casing or wrapping element and the main plate element 2.

Therefore, the casing or wrapping element 3, or rather the thermoplastic polyurethane (TPU) from which it is formed or constituted, is molded, preferably by injection, on an upper rear portion 2a of the main plate element 2. Therefore, the casing or wrapping element 3 is not obtained/molded separately and then constrained to the main plate element 2.

Therefore, the constraint between the main plate element 2 and the casing or wrapping element 3 is ensured or obtained thanks to the production by molding, preferably by injection, of the casing or wrapping element directly on the main plate element 2.

Preferably, the polyurethane for obtaining the casing or wrapping element 3 is softer than the polyurethane for obtaining the main plate 2, with a suitable hardness depending on the injection conditions and the features to be obtained. Thus, for example, as an indicative and non-limiting example, the main plate 2 could have a SHORE A hardness between 55 and 75, if desired 65 ± 5, while the casing or wrapping element 3 could have a SHORE A hardness between 40 and 60, if desired 50 ± 5. The greater hardness of the main plate 2 is advantageous for durability and passing the abrasion test, while it is useful that the material of the casing element 3 is more flexible so that it can compress during the walking step, favoring the energy dissipation.

The casing or wrapping element 3 defines alone or together with the main plate element 2, a positioning zone PZ of at least one insert 4 or of a solid or liquid material open, in use, upwards or away from the main plate element 2, which will then be closed by an overlying upper or other component of a footwear.

If desired, the casing or wrapping element 3 has a length or extension in the front F-rear R direction equal to between about 1/4 and about 1/2 of the length or extension of the main plate element 2, preferably between about 1/4 and about 1/3.

Advantageously, the casing or wrapping element 3 comprises a substantially ring-shaped or annular or tubular side wall 3a.

Even more advantageously, the casing or wrapping element 3 is open towards the bottom or towards the main plate element 2, so it is wholly or partially devoid of a base wall. This feature is naturally not essential.

More specifically, the side wall 3a of the casing or wrapping element 3 can include a front wall section 3a1, if desired straight in the direction from one side to the other, as well as a wall section on the rear and on the back of the sides 3a2, if desired curved or with several mutually inclined sections, the wall section on the rear and on the back of the sides 3a2 defining together with the front wall section 3a1 the ring-shaped side wall 3a.

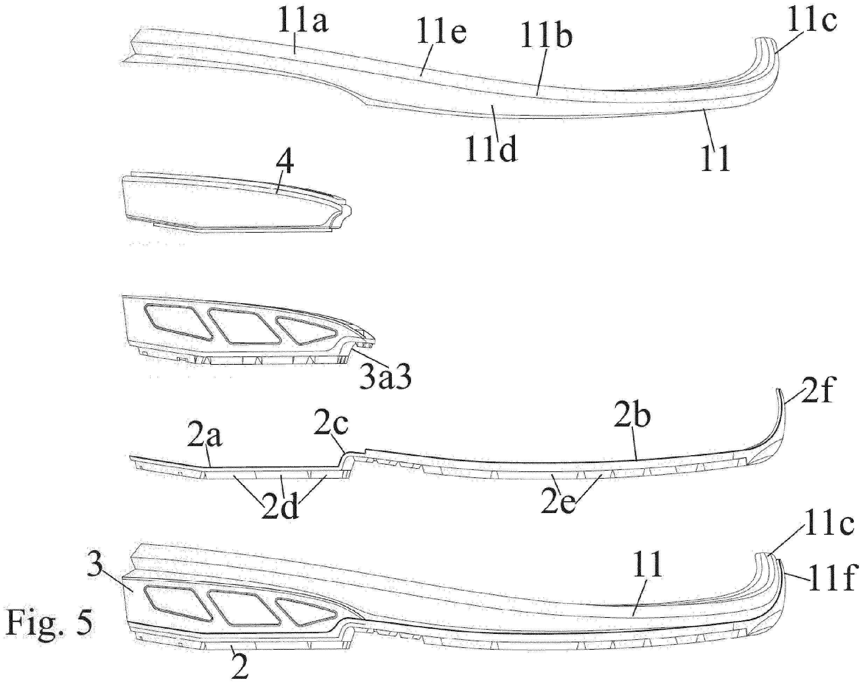

As regards the front wall section 3a1, it can be shaped so as to define a first step 3a3 (see figure 5) directed, in use, downwards.

If desired, the thickness or height of the side wall 3a decreases from the rear R towards the front F.

The wall section on the rear and on the back of the sides 3a2 can be formed over a edge section 2a1 on the rear and on the back of the sides of the main plate element 2, so that once the casing or wrapping element 3 has been obtained above the latter, the external surface of the wall section on the rear and on the back of the sides 3a2 is flush or aligned with the external surface of the edge section 2a1 on the rear and on the back of the sides of the main plate element 2.

According to the non-limiting embodiment illustrated in the figures, the casing or wrapping element 3 further includes a base wall section 3b which extends from all or part of the lower edge of the side wall 3a towards the inside of the casing or wrapping element 3.

If desired, the base wall section 3b extends towards the inside of the casing or wrapping element 3 only from the lower edge of the wall section on the rear and on the back of the sides 3a2.

The base wall section 3b is annular so as to even define a central opening CO. This opening CO can have an extension (horizontal, in use, dimension) between about 60% and 95%, preferably between about 80% and 95% of the extension of the internal light or opening defined by the side wall 3a.

According to the non-limiting embodiment illustrated in the figures, the positioning zone PZ is defined laterally by the side wall 3a of the casing or wrapping element 3, and on the bottom of the base wall 3b and, if desired, by an intermediate part or central part of a rear portion 2a of the main plate 2.

The positioning zone PZ could have any configuration, for example substantially like the rear of the main plate 2 with constant or even decreasing height moving away from the rear R.

Preferably, the main plate element 2 and the casing or wrapping element 3 are provided with mechanical means for mutual engagement or engagement with each other 5, 6.

With regard to this aspect, the main plate element 2 can delimit a plurality of openings 5 and/or protrusions, while the casing or wrapping element 3 has projecting portions 6 within the openings 5 and/or recesses for receiving the protrusions, so as to increase the mechanical constraint between the main plate element 2 and the casing or wrapping element 3.

In relation to this aspect, the mechanical engagement means 5, 6 are provided on the edge section 2a1 on the rear and on the back of the sides of the main plate element 2 and on the base wall 3b.

More specifically, openings 5, preferably non-passing, can be provided on the edge section 2a1 on the rear and on the back of the sides of the main plate element 2. More specifically, several openings 5 can be provided spaced along the edge section 2a1 on the rear and on the back of the sides or perimetrically on the back and on the rear part of the sides.

In this case, starting from the base wall 3b, preferably, projecting portions 6 extend which each engage within a respective opening 5, so as to increase the mechanical constraint between the main plate element 2 and the casing or wrapping element 3.

More specifically, the openings 5, if provided, are open upwards and are closed at the bottom and formed at or immediately above a respective cleat 2d of the main base plate element 2.

With reference then to the projecting portions 6, they could be formed or extend at or immediately below recesses formed in the base wall 3b.

Naturally, the openings 5 could have an irregular or regular configuration complementary to the projecting portions 6.

The same applies to the case in which the main plate element 2 has protrusions and the casing or wrapping element 3 has recesses for receiving the protrusions.

Naturally, the main plate element 2 may or may not include secondary non-passing openings 5a also in its front portion 2b, if desired also in this case vertically aligned or immediately above respective cleats 2e.

According to the embodiment illustrated in the figures, however, no openings are provided in the rear portion other than the perimeter ones for the engagement of protrusions in the casing or wrapping element 3.

The thickness of the main plate 2 could be any suitable, for example between 1 and 3 mm, preferably between 1.8 and 2.2 mm. Of course, the thickness of the main plate 2 depends on the tread design.

The base or tread component 1 can include an edge portion projecting upwards from the main plate element 2 only at the rear, which edge portion is defined by the casing or wrapping element 3.

Advantageously, the casing or wrapping element 3 is transparent or translucent so as to allow to see through it whole or part of the positioning zone PZ and thus one or more possible inserts 4 or solid or liquid material (even loose) housed in the same.

If desired, the main plate element 2 has a front or anterior portion 2b and a rear portion 2a, if desired offset, in use, downwards with respect to the front portion 2b, between the front portion 2b and the rear portion 2a being defined or provided a second step 2c of connection or continuation of the main plate element 2.

The front or anterior portion 2b is substantially flat or slightly curved and the same applies to the rear portion 2a.

In this case, the casing or wrapping element 3 is made or obtained so as to be housed above the rear portion 2a.

Preferably, the casing or wrapping element 3 has a bulk, in plan, both in width and in length, corresponding to the rear portion 2a of the main plate 2, with the external lateral surface of the casing or wrapping element 3 or rather of the wall section of the wall section on the rear and on the back of the sides 3a2 substantially aligned with the lateral surface of the edge section 2a1 on the rear and on the back of the sides of the main plate element 2.

If desired, the casing or wrapping element 3 has its own front, in use, wall section 3a1, in abutment or support, at the first step 3a3, against the second step 2c.

The main plate element 2 can also have a tip 2f which extends upwards starting from the anterior or front edge 2b of the main body of the main plate element 2.

Subject-matter of the present invention is also a footwear 9, for example a work or safety footwear, comprising an upper 10, a base or tread component 1 and a midsole 11 of connection between the upper 10 and the base or tread component 1, which midsole 11 is obtained by molding, preferably by injection, in a position between the upper 10 and the base or tread component 1. Actually, the sole of this footwear 9 is made of the base or tread component 1 and the midsole 11.

The midsole 11 is made of polyurethane.

Therefore, the constraint between the upper 10 and the base or tread component 1 is guaranteed or obtained thanks to the production by molding, preferably by injection, of the midsole 11 directly on or around the upper 10 and the base or tread component 1.

In this case, the footwear 9 can also include at least one shock-absorbing insert 4 or solid or liquid shock-absorbing or with rebounding capacity material housed in the positioning area PZ closed, if desired sealed, between the upper 10 and the base or tread component 1, thanks also to the midsole 11.

The shock-absorbing insert 4 can be made of polymer, composite or other material, it can be solid or hollow, of regular or irregular shape, colored with neutral colors (white, black) or not.

The insert could also be made up of a liquid inside a fluid-tight membrane or even directly poured into the positioning zone PZ.

Furthermore, the insert 4 can have a configuration such that it is inserted substantially to measure or, if desired, even with a slight slack in the positioning zone PZ.

With reference to this aspect, the insert 4, once housed in the positioning zone PZ, does not protrude upwards or exceed the level of the casing or wrapping element 3. In this regard, once the insert 4 has been housed in the positioning zone PZ, its top, in use, surface, is substantially aligned with or lower than the top, in use, surface of the casing or wrapping element 3.

Alternatively, the insert could also include solid or liquid material, even loose.

The thickness or height of the insert 4 can or not decrease from the rear R towards the front F, in a manner corresponding to the side wall 3a.

The midsole 11 can, for example, have an annular or tubular configuration.

According to the embodiment illustrated in the figures, the midsole 11 has a rear section 11a which extends at and partly, in use, upwards, starting from the upper edge 3a4 of the casing or wrapping element 3 and a front section 11b which extends at and partly, in use, upwards, starting from the outer or perimeter edge 2g of the main plate element 2.

More specifically, the rear section 11a of the midsole extends at and partly, in use, upwards, starting from the upper edge 3a4 of the wall section on the rear and on the back of the sides 3a2, while the front section 11b extends at and partly, in use, upwards, starting from the outer or perimeter edge 2g of the front portion 2b of the main plate element 2.

The rear section 11a of the midsole 11 can have a thickness smaller than the front section 11b.

The midsole 11 can also include a tip 11c which rises upwards starting from the front end of the front portion 2b.

The rear 11a and front 11b section then define a lower annular part 11d and an upper annular part 11e, the lower annular part 11d being constrained or made or molded around and on or within an upper section of the casing or wrapping element 3 and of the main plate element 2, while the upper annular part 11e is constrained or made or molded around and on or within a lower section of the upper 10.

The upper 10 can comprise a body that is open or even closed at the bottom.

Naturally, the footwear 9 or rather the respective upper 10 could also have a reinforced toe, for example by means of plastic or metal components.

The footwear 9 could also include an insole or similar placed in the upper 10 or on the base or tread component 1.

Subject-matter of the present invention is also a method for obtaining a base or tread component 1, comprising the following steps:
- obtaining the main plate element 2 by molding polyurethane,
- obtaining the casing or wrapping element 3 by molding polyurethane on the upper rear portion 2a of the main plate element 2.

The constraint between the main plate element 2 and the casing or wrapping element 3 is therefore ensured or obtained thanks to the realization by molding of the casing or wrapping element directly on the main plate element 2.

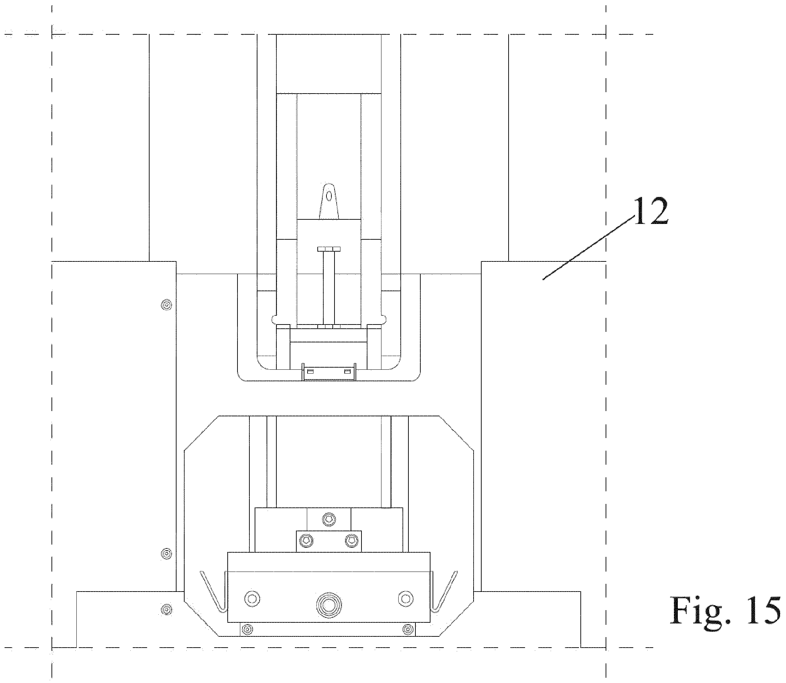

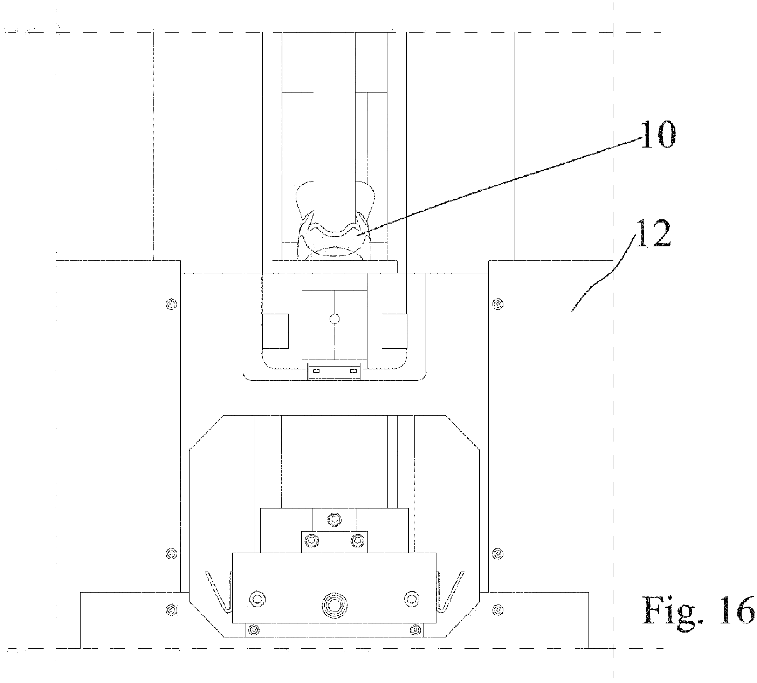

These molding steps are preferably carried out by injection molding into a mold. A method for obtaining a footwear 9, however, includes the following steps:
- arranging in a mold an upper 10 as well as a base or tread component 1, such that the upper 10 is in a position higher than the base or tread component 1 (see figure 15),
- forming, by molding between the upper 10 and the base or tread component 1, the midsole 11 of connection between upper 10 and base component or tread 1 (see figure 16).

The constraint between the upper 10 and the base or tread component 2 is therefore guaranteed or obtained thanks to the realization by molding of the midsole 11 directly on these components, in such a way that a lower annular part 11d is obtained or molded around and on or within an upper section of the casing or wrapping element 3 and of the main plate element 2, while an upper annular part 11e of the midsole is made or molded around and on or within a lower section of the upper 10.

The molding step of the midsole is preferably carried out by injection molding.

This method can also include a step which involves arranging an insert 4 or solid or liquid material and, before obtaining the midsole 11, housing it in the positioning zone PZ defined by the casing or wrapping element 3. This housing step can naturally be carried out before or after the base or tread component 1 is placed in the mold 12.

Clearly, once the midsole 11 has been obtained, the insert 4 or the solid or liquid material will remain stably housed in the positioning zone between the base or tread component 2 and the upper 10.

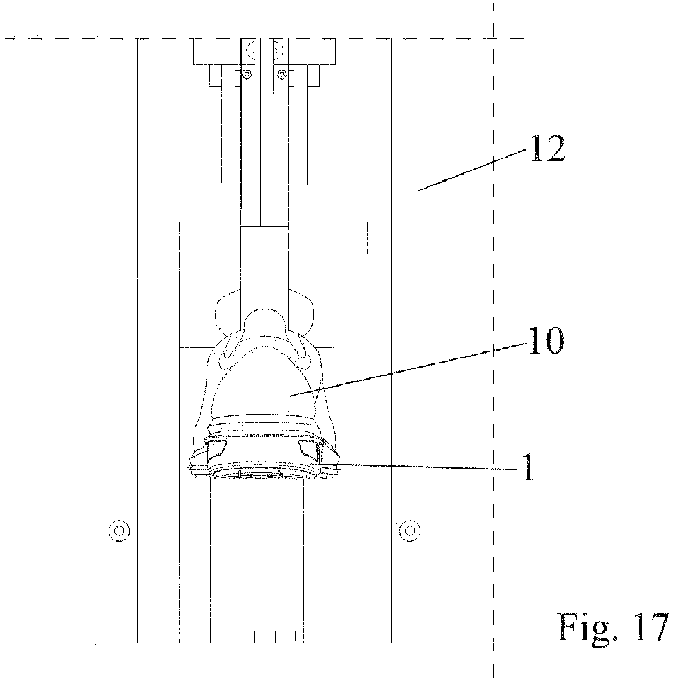

Naturally, after the maturation time of the material, for example polymeric, to obtain the midsole, the mold is opened, if desired by opening a ring component, part of the mold that contained the base or tread component is lowered and remains, on the last of the mold, the complete footwear (see figure 17).

Subsequently, it is possible also to trim or remove the burr or waste, particularly from the midsole, obtaining the final footwear 9.

As it will be understood, the idea behind the present invention is to obtain a system integrated into the sole or rather into the respective base or tread component 1, which can contain any insert with rebounding capacity.

Furthermore, the base or tread component 1 is able to protect the insert 4 or the material, even loose, solid or liquid on all its sides, with a specific and anatomical design, and can keep the insert 4 still during the process of injecting or obtaining the midsole.

Furthermore, at the end of this procedure, the insert or the solid or liquid material can also be visible (if the base or tread component 1 is transparent or translucent), but it cannot be taken and ruined, and moreover there are no problems for the insert during the adhesion process of the component 1 with the midsole 11.

To this end, subject-matter of this patent is a special sole or base component in TPU with a casing or "pocket" also made of TPU, but softer, which is preferably injected immediately after the tread and is welded to it generating a single body.

The casing or wrapping element 3 or "pocket" has been designed and created with an upper perimeter edge which allows inserting and easily housing inside it a shock-absorbing insert 4 which can have the required dispersion features and which can be made of polymer or not, be solid or hollow, of regular or irregular shape, colored with neutral colors (white, black) or not.

Therefore, a casing or pocket 3, in fact, welded to the main plate 2 and specifically designed to protect and contain the insert with a "gasket" system that allows the insert to be blocked and prevent the passage of the material of the midsole during its formation is obtained.

The midsole 11 is instead actually chemically "welded" to the base plate 2 and to the containment edge of the casing 3 and it covers the material of the insert for a few millimeters, without the possibility of penetrating into the positioning zone PZ, thanks to the containment edge which prevents the polyurethane of the midsole from entering between the insert 4 and the casing 3. The safety of the process is such that the casing or pocket 3 can also be transparent to show evidence of the result obtained.

Thanks to the present invention the following advantages are obtained:
- possibility of using a wide range of materials for the insert, not taken into consideration so far because they are not compatible with the polyurethane of the midsole,
- complete protection from the material of the insert by the base or tread component, which allows us to guarantee that the finished product will also be suitable for even the most hostile work environments for the safety of operators,
- the geometry of the components guarantees shock absorption and return of force or push in any walking condition,
- the insert is constantly locked in its position, so it is forced to constantly respond to the stresses and impulses given to it.

The present invention therefore represents a notable innovation compared to the state of the prior art, since it combines increased comfort with a system completely integrated into the footwear which eliminates the risk of breakage or malfunction.

The footwear and the method described above are susceptible to numerous modifications and variations within the scope of protection of the claims that follow.

## Claims

1. Base or tread component for a footwear comprising a main plate element (2) made of thermoplastic polyurethane (TPU), wherein said base or tread component comprises a casing or wrapping element (3) made by molding of thermoplastic polyurethane (TPU) on an upper rear portion (2a) of said main plate element (2), said casing or wrapping element (3) defining alone or together with said main plate element (2) a positioning zone ( PZ) of at least one insert (4), which zone is open, in use, upwards or away from said main plate element (2).

2. Base or tread component according to claim 1, wherein said casing or wrapping element (3) comprises a substantially ring-shaped or annular or tubular side wall (3a).

3. Base or tread component according to claim 2, wherein said casing or wrapping element (3) is open towards the bottom or towards said main plate element (2), whereby it is wholly or partially devoid of a base wall.

4. Base or tread component according to claim 2 or 3, wherein said side wall (3a) of said casing or wrapping element (3) comprises a front wall section (3a1) and a wall section on the rear and on the back of the sides (3a2), said wall section on the rear and on the back of the sides (3a2) defining together with said front wall section (3a1) said ring-shaped side wall (3a).

5. Base or tread component according to claim 4, wherein said wall section on the rear and on the back of the sides (3a2) is formed over an edge section (2a1) on the rear and on the back of the sides of said main plate element (2), so that once the casing or wrapping element (3) has been obtained above the latter, the external surface of the wall section on the rear and on the back of the sides (3a2) is flush or aligned with the external surface of edge section (2a1) on the rear and on the back of the sides of the main plate element (2).

6. Base or tread component according to any one of claims 2 to 5, wherein said casing or wrapping element (3) comprises a base wall section (3b) which extends from whole or part of the lower edge of the side wall (3a) towards the inside of the casing or wrapping element (3).

7. Base or tread component according to any one of the preceding claims, wherein said main plate element (2) and said casing or wrapping element (3) are provided with mechanical means (5, 6) of mutual engagement or engagement with each other.

8. Base or tread component according to the preceding claim, wherein said main plate element (2) delimits a plurality of openings (5) and/or protrusions and wherein said casing or wrapping element (3) has portions projecting (6) within said openings (5) and/or recesses for receiving said protrusions, so as to increase the mechanical constraint between said main plate element (2) and said casing or wrapping element (3).

9. Base or tread component according to claim 6 and 7 or 6 and 8, wherein said mechanical engagement means (5, 6) are provided on the edge section (2a1) on the rear and on the back of the side of the main plate element (2) and on the base wall (3b) of said casing or wrapping element (3).

10. Base or tread component according to any one of the preceding claims, comprising an edge portion projecting upwards from said main plate element (2) only at the rear, which edge portion is defined by said casing or wrapping element (3).

11. Base or tread component according to any one of the preceding claims, wherein said casing or wrapping element (3) is transparent or translucent so as to allow to see through it wholly or partly said positioning zone (PZ).

12. Base or tread component according to any one of the preceding claims, wherein said main plate element has a front portion (2b) and a rear portion (2a) offset, in use, downwards with respect to said front portion (2b), between said front portion (2b) and said rear portion (2a) being provided a step (2c) of connection or continuation of said main plate element (2).

13. Base or tread component according to claim 12, wherein said casing or wrapping element (3) is made so as to be housed in said rear portion (2a) with its own front, in use, wall section (3a1), in abutment or support against said step (2c).

14. Footwear, for example work or safety footwear, comprising an upper (10), a base or tread component (1) according to any one of the preceding claims and a midsole (11) of connection between the upper (10) and the base or tread component (11), said midsole (11) being obtained by molding in a position between said upper (10) and said base or tread component (1).

15. Footwear according to claim 14, comprising at least one shock-absorbing insert (4) or solid or liquid material housed in said positioning zone (PZ), which is closed by said upper.

16. Footwear according to claim 14 or 15, wherein said midsole (11) has an annular or tubular configuration.

17. Footwear according to claim 16, wherein said midsole (11) has a rear section (11a) which extends at and partly, in use, upwards, starting from the upper edge (3a4) of the casing or wrapping element (3) and a front section (11b) which extends at and partially, in use, upwards, starting from the outer or perimeter edge (2g) of the main plate element (2).

18. Footwear according to claim 17, wherein said rear (11a) and front (11b) section of said midsole define a lower annular part (11d) and an upper annular part (11e), said lower annular part (11d) being constrained or made or molded around and on or within an upper section of the casing or wrapping element (3) and of the main plate element (2), while the upper annular part (11e) is constrained or made or molded around and on or within a lower section of the upper (10).

19. Method for obtaining a base or tread component according to any one of claims 1 to 13, comprising the following steps:
- obtaining said main plate element (2) by molding thermoplastic polyurethane (TPU),
- obtaining said casing or wrapping element (3) by molding thermoplastic polyurethane (TPU) on said upper rear portion (2a) of said main plate element (2).

20. Method for obtaining a footwear according to claim 14, 15, 16, 17 or 18, comprising the following steps:
- arranging in a mold an upper (10) as well as a base or tread component (1) according to any one of claims 1 to 13,
- forming by molding between said upper (10) and said base or tread component (1) said midsole of connection (11) between upper (10) and base or tread component (1).

21. Method according to claim 20, comprising a step of arranging at least one insert (4) or solid or liquid material and, before obtaining said midsole (11), housing said at least one insert in said positioning zone (PZ) defined by said casing or wrapping element (3).
